# EUROPÄISCHE PATENTANMELDUNG

(11) **EP 1 251 306 A2**
(43) Veröffentlichungstag der Anmeldung: **23.10.2002**
(21) Anmeldenummer: 02008953.8
(22) Anmeldetag: 22.04.2002
(51) Int. Cl.: F16M 9/00, F03D 11/04

(54) **Geteilter Grundrahmen zur Lagerung des Rotors einer Windkraftanlage auf deren Turm**

(30) Priorität: 20.04.2001 DE 10119428
(71) Anmelder: Enron Wind GmbH, 48499 Salzbergen (DE)
(72) Erfinder: Becker, Markus, 48149 Münster (DE); Weitkamp, Roland, 49191 Belm-Icker (DE); Schellings, Vincent, 7511 Enschede (NL)
(74) Vertreter: Patentanwälte Leinweber & Zimmermann

(57) **Zusammenfassung**

Zur Erleichterung des Transportes und der Montage bei der Errichtung von Windkraftanlagen wird für die auf dem Turm der Windkraftanlage azimutal verstellbare Gondel ein zweigeteilter Grundrahmen vorgeschlagen, dessen unterer Teil 16 die Azimutalantriebseinrichtung 23 und dessen oberer Teil 6 den Triebstang 1, 2, 12, 13, 14 aufweist. Die beiden Teile werden werkseitig vormontiert, auf den Turm aufgesetzt und an ihrer Verbindungsstelle 15 miteinander verschraubt.

## Beschreibung

Die Erfindung bezieht sich auf einen Grundrahmen zur Anordnung eines von einem windgetriebenen Rotor angetriebenen Triebstrangs einer Windkraftanlage an deren Turm, auf dem der Grundrahmen mit im wesentlichen horizontaler Ausrichtung der Rotorachse um die im wesentlichen vertikale Turmachse azimutal drehbar befestigt ist und aus einem den Triebstrang tragenden oberen Teil und einem damit an einer Verbindungsstelle zusammengesetzten, eine der azimutalen Drehung dienende Azimutalantriebseinrichtung aufweisenden unteren Teil aufgebaut ist.

Bekannte Windkraftanlagen, bei denen die Rotorachse im wesentlichen quer zur Turmachse d.h. im wesentlichen horizontal angeordnet und in Abhängigkeit von der Windrichtung azimutal verstellbar ist, weisen üblicherweise am oberen Ende des Turms ein azimutal verstellbares Maschinengehäuse, auch Gondel genannt, auf, in dem der Triebstrang andeordnet ist, der beispielsweise eine Rotorwelle, ein eingangsseitig an die Rotorwelle angeschlossenes Getriebe, durch das die verhältnismäßig geringe Drehzahl des Rotors in eine hohe Drehzahl am Ausgang des Getriebes übersetzt wird, und einen an den Ausgang des Getriebes angeschlossenen Generator aufweist, wobei in der Gondel ggf. weitere für den Betrieb der Windkraftanlage erforderliche mechanische und elektrische Komponenten untergebracht sein können. Mit zunehmender Leistung dieser Windkraftanlagen werden die Abmessungen dieses Maschinengehäuses sowie das Gewicht des Maschinengehäuses und der darin untergebrachten Komponenten immer größer. Dies stellt ein erhebliches Problem bei der Errichtung von Windkraftanlagen dar, weil es mit zunehmenden Abmessungen und Gewichten immer schwieriger wird, den Transport zur Baustelle und die Montage zu realisieren.

Im Hinblick auf diese Schwierigkeiten liegt der Erfindung die Aufgabe zugrunde, einen Grundrahmen der eingangs genannten Art zu schaffen, der bei ausreichender Stabilität die Bewältigung der mit der Errichtung von Windkraftanlagen verbundenen Transport- und Montageaufgaben erleichtert.

Erfindungsgemäß wird diese Aufgabe dadurch gelöst, daß sich die Verbindungsstelle (15) längs eines im wesentlichen horizontalen Querschnitts erstreckt, der in der Richtung der Rotorachse (3) eine größere Abmessung aufweist als in der dazu senkrechten Richtung.

Durch die zweiteilige Ausbildung des Grundrahmens wird eine Verteilung der Gesamtmasse und der Gesamtabmessungen auf zwei Teilsysteme erreicht, deren jedes sich leichter zur Baustelle transportieren und auf den Turm heben läßt. Besonders entscheidend ist dabei die durch die zweiteilige Ausbildung erreichte Begrenzung der Transporthöhe. Ein weiterer Vorteil besteht darin, daß bei baustellenseitig ausreichender Krankapazität eine vollständige Vormontage des oberen und des unteren Teils mit den jeweils unterzubringenden Komponenten im Herstellerwerk erfolgen kann. Beispielsweise kann der untere Teil mit der Azimutalantriebseinrichtung und der obere Teil mit dem Triebstrang und ggf. allen weiteren Komponenten werksseitig vormontiert werden. Auf der Baustelle braucht dann nur der untere Teil auf den Turm und der obere Teil auf den unteren Teil montiert zu werden, während alle übrigen schon werkseitig vorweggenommenen Montagearbeiten entfallen.

Die erfindungsgemäße Ausbildung der Verbindungsstelle ist hinsichtlich der sie beanspruchenden Kräfte strukturmechanisch besonders günstig. Die auf den windgetriebenen Rotor einwirkenden Kräfte werden längs der Rotorachse in den oberen Teil des Grundrahmens eingeleitet. Für die hierdurch verursachte Belastung der Verbindungsstelle ist es besonders günstig, daß sie in dieser Richtung ihre größere Abmessung aufweist.

Eine zweckmäßige Ausführungsform zeichnet sich dadurch aus, daß der Grundrahmen einen durch eine im wesentlichen geschlossene Wandung in Bezug auf die Turmachse radial begrenzten Hohlkörper (8) aufweist, dessen Querschnitte in seinem an das obere Ende des Turmes angrenzenden unteren Endbereich (17) eine kreisförmige Kontur aufweisen, die für die axial darüber gelegenen Querschnitte in eine in Richtung der Rotorachse (3) langgestreckte Kontur übergeht, und die Verbindungsstelle (15) im Bereich seiner langgestreckten Konturen angeordnet ist.

Die kreisförmige Kontur des radialen Hohlkörperquerschnitts im unteren Endbereich des unteren Teils dient der Anpassung an die azimutale Verstellbarkeit in Bezug auf die Turmachse. Durch den nach oben hin fließenden Übergang in die langgestreckte Querschnittskontur passt sich der Hohlkörper formmäßig an die von dem oberen Teil aufzunehmenden Komponenten an. Da die hauptsächliche Krafteinleitung über den an dem oberen Teil angeordneten Rotor in der Richtung seiner Rotorachse erfolgt, wird durch die Anordnung der Verbindungsstelle im Bereich der langgestreckten Querschnittskonturen eine strukturmechanisch optimale Anpassung der Verbindungsstelle erreicht.

In einer besonders zweckmäßigen Ausführungsform ist vorgesehen, daß sich die Verbindungsstelle der beiden Teile in einer sich parallel zur Rotorachse und senkrecht zur Turmachse erstreckenden Ebene erstreckt. Für den Fall, daß in bekannter Weise die Rotorachse zum Ausgleich windbelastungsabhängiger Durchbiegungen der Rotorblätter sich nicht genau senkrecht zur Turmachse, daß heißt nicht genau horizontal erstreckt, sondern zur Nabe des Rotors hin geringfügig ansteigt, folgt dann die die beiden Teile trennende Ebene vorzugsweise diesem Anstieg der Rotorachse.

Weiter ist es zweckmäßig, den Grundrahmen derart auszubilden, daß jeder der beiden Teile im Bereich der Verbindungsstelle einen in Bezug auf die Turmachse im wesentlichen radialen Flansch aufweist, deren einander zugewandte Stirnflächen zusammenspannbar sind, wobei insbesondere die beiden Teile durch die Flansche durchsetzende Schraubbolzen verbindbar sind. Somit ist es bei der Endmontage lediglich erforderlich, den oberen Teil mit seinem Flansch auf den Flansch des unteren Teils aufzusetzen und die beiden Flansche kraftschlüssig zusammenzuspannen. Insbesondere können längs der umlaufenden Flansche, die sich beispielsweise von der Innenwand des Hohlkörpers aus erstrecken, in enger Aufeinanderfolge viele Durchgangsbohrungen angeordnet werden, durch die bei der Endmontage eine entsprechend große Anzahl von Schraubbolzen hindurchgeführt wird um dadurch die Flansche miteinander fest zu verschrauben.

Hinsichtlich der Formgebung des Hohlkörpers erweist es sich insbesondere als zweckmäßig, daß die langgestreckten Konturen im Bereich der Verbindungsstelle symmetrisch zur Rotorachse ausgebildet sind und an ihrem dem Rotor abgewandten Endbereich einen sich quer zur Rotorachse erstreckenden, an seinen Enden in Richtung auf den dem Rotor zugewandten Endbereich umgebogenen ersten Abschnitt, an ihrem dem Rotor zugewandten Endbereich einen zum abgewandten Endbereich hin gebogenen zweiten Abschnitt und zwei den ersten mit dem zweiten Abschnitt verbindende Seitenabschnitte aufweisen. Diese Formgebung ist insbesondere hinsichtlich der mechanischen Festigkeit des Hohlkörpers günstig. Dabei ist vorzugsweise der erste Abschnitt leicht nach außen gewölbt, während die beiden Seitenabschnitte, insbesondere zur Begrenzung der Querabmessung, nahezu gerade mit nur ganz schwacher Wölbung nach außen verlaufen und durch diese abgeflachte Form zur Reduzierung der Transportbreite beitragen.

Aus diesen Gründen ist es hinsichtlich der Formgebung ferner zweckmäßig, daß die Konturen der zur Turmachse und zur Rotorachse parallelen Längsschnitte des Hohlkörpers in ihrem dem Rotor abgewandten Bereich im wesentlichen parallel zur Turmachse und in ihrem dem Rotor zugewandten Bereich unter einem von unten nach oben hin zunehmenden Abstand zur Turmachse verlaufen. Diese Formgebung hat den weiteren Vorteil, daß der dem Rotor zugewandte Bereich des Hohlkörpers von unten nach oben gegenüber dem Turm schiffsbugartig auskragt, wodurch der davor umlaufende Rotor einen entsprechenden Abstand zum Turm einnimmt.

Im Rahmen der Erfindung ist ferner vorgesehen, daß in dem oberen Teil in dessen dem Rotor zugewandten Bereich eine Aufnahme für ein Rotorwellenlager ausgebildet ist. Hierdurch wird auf besonders einfache Weise die Lagerung der Rotorwelle am Grundrahmen erreicht.

Aus ähnlichen Gründen ist es zweckmäßig, daß in dem oberen Teil in dessen dem Rotor abgewandten Bereich eine Aufnahme zur Abstützung eines Getriebes ausgebildet ist. Hierdurch wird die Anordnung des Getriebes an dem Grundrahmen erleichtert.

Ein weiterer Gesichtspunkt der Erfindung besteht darin, daß der untere Teil an seinem an das obere Ende des Turms angrenzenden unteren Endbereich einen radial nach innen gerichteten Flansch aufweist, an dem mindestens ein Stellmotor der Axialantriebseinrichtung mit zur Turmachse paralleler Antriebsachse und einem auf der Antriebsachse drehfest festgelegten Ritzel zum kämmenden Eingriff in einen auf dem oberen Ende des Turms koaxial zur Turmachse befestigten Innenzahnkranz angeordnet ist. Diese Befestigung des Stellmotors an dem Flansch des unteren Teils ermöglicht einen besonders einfachen Aufbau der Axialantriebseinrichtung. Wenn der Stellmotor eingeschaltet wird, kämmt das von ihm angetriebene Ritzel mit dem turmfesten Innenzahnkranz und bewirkt dadurch die azimutale Verstellung des Grundrahmens. In der Regel sind mehrere solcher Stellmotore, insbesondere vier Stellmotore vorgesehen, die paarweise symmetrisch beidseits einer durch die Rotorachse und die Turmachse gelegten gedachten Ebene angeordnet sind.

Im Hinblick auf die Azimutalantriebseinrichtung ist es weiterhin zweckmäßig, daß der Innenzahnkranz am Innenring eines Wälzlagers ausgebildet ist, dessen Außenring an dem unteren Teil befestigt ist. Hierdurch wird auf einfache Weise die azimutale Verdrehbarkeit zwischen Turm und Grundrahmen sowie die axiale Festlegung des Grundrahmens am Turm gewährleistet.

Eine für alle Ausführungsform bedeutsame weitere Ausgestaltung besteht darin, daß an dem oberen Teil zwei sich von dessen dem Rotor abgewandten Ende aus im wesentlichen in der Richtung der Rotorachse erstreckende Träger angeordnet sind, auf denen mindestens ein Generator der Windenergieanlage abstützbar ist. Diese beiden Träger können auch zur Abstützung weiterer mechanischer und elektrischer Komponenten der Windkraftanlage dienen. Zweckmäßigerweise ist der quer zur Rotorachse gemessene gegenseitige Abstand der beiden Träger größer als die Querabmessungen des Generators bzw. der weiteren Komponenten. In diesem Fall sind der Generator und die weiteren Komponenten zweckmäßigerweise auf den Abstand überbrückenden Querträgern abgestützt. Der Generator und die ggf. weiteren Komponenten sowie auch das Getriebe lassen sich sodann für Zwecke der Montage oder Demontage zwischen den beiden Trägern nach unten abnehmen, wobei ggf. vorher die Verbindung der Querträger an den Trägern gelöst werden muß. Die Träger müssen nicht genau parallel zur Richtung der Rotorachse verlaufen. Insbesondere können sie in Richtung auf ihr dem Rotor abgewandtes Ende konvergieren.

In der folgenden Beschreibung wird die Erfindung unter Bezugnahme auf die Zeichnung näher erläutert. Hierin zeigen:
- Fig. 1: einen durch die Turmachse und die Rotorachse einer Windkraftanlage gelegten Längsschnitt eines Grundrahmens mit daran montierten Baueinheiten gemäß der Linie A-A in Fig. 2,
- Fig. 2: eine Aufsicht in Richtung der Turmachse auf den in Fig. 1 dargestellten Grundrahmen,
- Fig. 3: einen Querschnitt durch den Grundrahmen gemäß der Linie C-C in Fig. 1 und
- Fig. 4: eine Ansicht einer Verbindungsstelle zwischen einem unteren und einem oberen Teil eines Hohlkörpers des in Fig. 1 bis 3 dargestellten Grundrahmens.

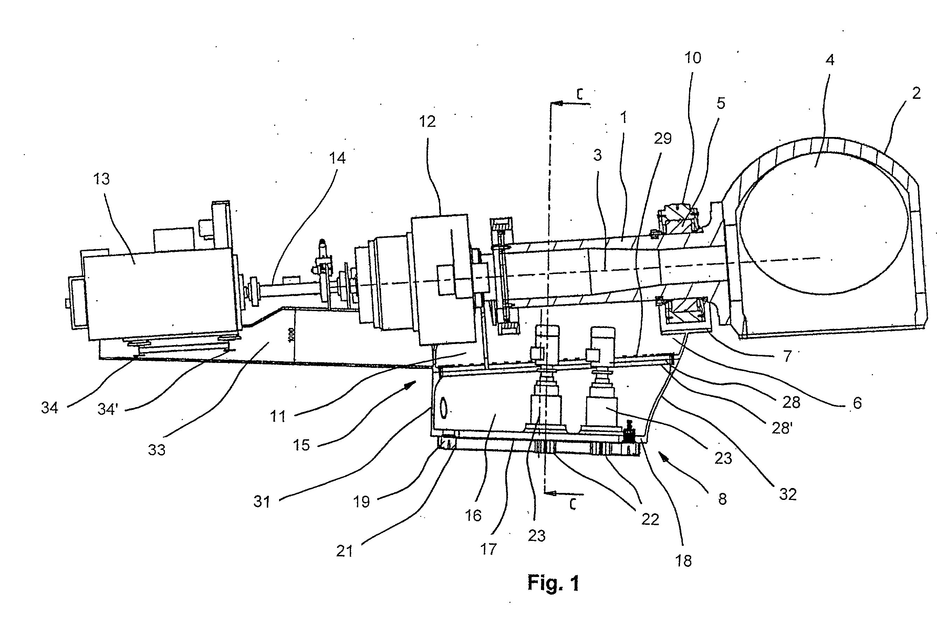

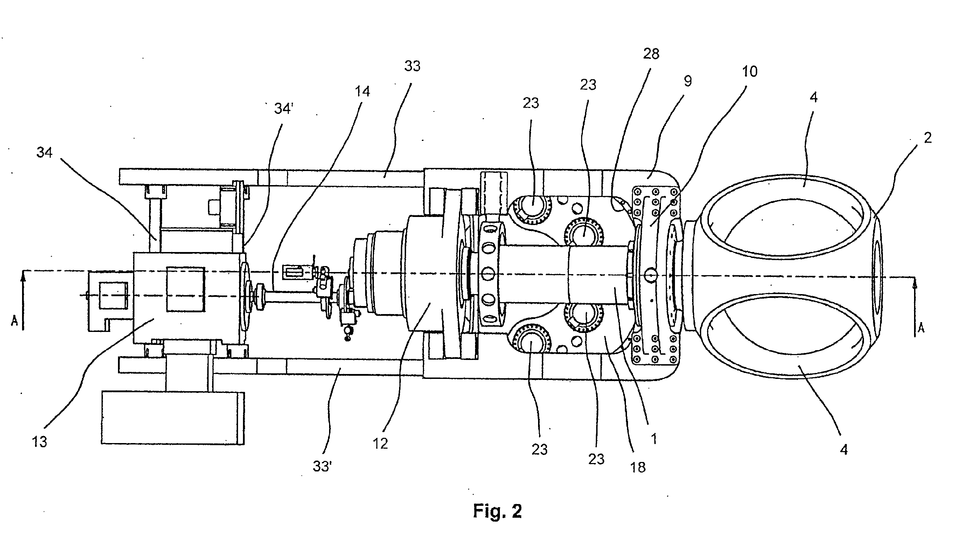

In Fig. 1 und 2 ist die Welle 1 und die an ihrem einen Ende angeordnete Nabe 2 des Rotors einer Windkraftanlage erkennbar, wobei auch die Rotorachse 3, um die sich der Rotor dreht, eingezeichnet ist. Die Nabe 2 weist in dem dargestellten Ausführungsbeispiel insgesamt drei in Bezug auf die Rotorachse 3 azimutal gleichbestandete radiale Aufnahmeöffnungen 4 für die Enden dreier Rotorblätter (nicht dargestellt) auf, deren Längsachsen sich radial zur Rotorachse 3 erstrecken und die in den Aufnahmeöffnungen 4 um ihre Längsachsen zur Einstellung ihres Anstellwinkels verdrehbar sind. Die Welle 1 ist nahe der Nabe 2 mittels eines Hauptlagers 5 gelagert, das in einer in einem oberen Teil 6 ausgebildeten Aufnahme 7 eines Hohlkörpers 8 festgelegt ist. In Verbindung mit Fig. 2 wird deutlich, daß der obere Teil 6 im Bereich der Aufnahme 7 einen freien Rand 9 aufweist, der in einer durch die Rotorachse 3 gelegten gedachten Ebene liegt, die sich senkrecht zur Zeichnungsebene von Fig. 1 und parallel zur Zeichnungsebene von Fig. 2 erstreckt. Von diesem freien Rand 9 aus ist die Aufnahme 7 in Bezug auf die Rotorachse 3 halbkreisförmig aus dem oberen Teil 6 des Hohlkörpers 8 ausgenommen. Darüber erstreckt sich eine dazu komplementäre halbkreisförmige Lagerhalterung 10, die durch Schraubbolzen auf den freien Rand 9 aufgespannt ist.

In dem dem Rotor abgewandten Bereich des oberen Teils 6 ist eine Aufnahme 11 ausgebildet, die zur Halterung eines mit dem der Nabe 2 entgegengesetzten Ende der Welle 1 verbundenen Getriebes 12 dient. In dem Getriebe 12 wird die verhältnismäßig niedrige eingangsseitige Drehzahl der Welle 1 auf eine zum Antrieb eines elektrischen Generators 13, der mit dem Ausgang des Getriebes 12 durch eine Kupplung 14 gekoppelt ist, hochgesetzt. Der obere freie Rand 9 des oberen Teils 6 verläuft auch in diesem Bereich etwa in der sich durch die Rotorachse 3 sowie senkrecht zur Zeichnungsebene von Fig. 1 bzw. parallel zur Zeichnungsebene von Fig. 2 erstreckenden gedachten Ebene, so daß der etwa zylindrische Körper des Getriebes 12 radial gesehen zur Hälfte innerhalb der Aufnahme 11 liegt.

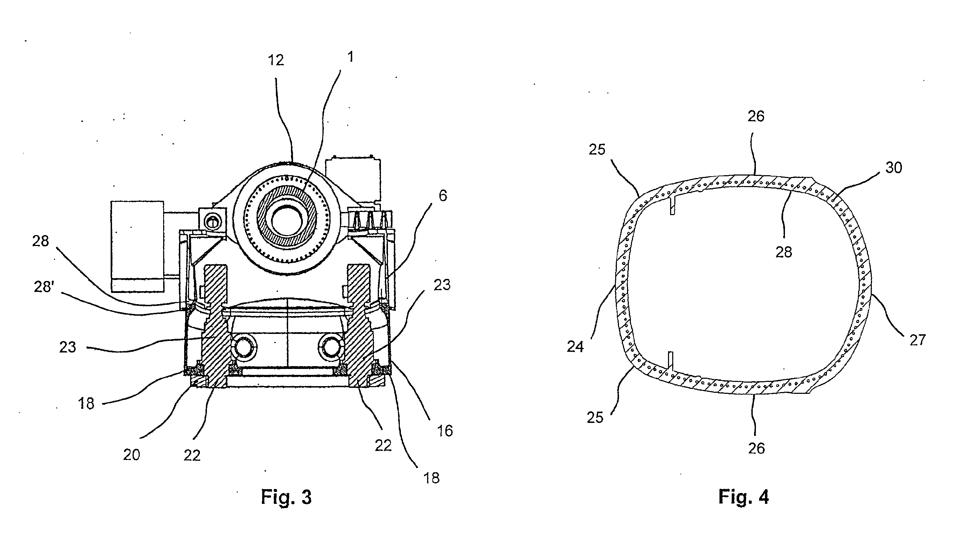

Von seinem oberen freien Rand 9 aus erstreckt sich der obere Teil 6 des Hohlkörpers 8 im wesentlichen quer zur Rotorachse 3 bis zu einer Verbindungsstelle 15 mit einem unteren Teil 16 des Hohlkörpers 8. Der der Verbindungsstelle15 entgegengesetzte untere Endbereich 17 des unteren Teils 16 dient zur Verbindung mit dem oberen Ende des Turms (nicht dargestellt) der Windkraftanlage. Zu diesem Zweck weist der untere Endbereich 17 einen nach innen gerichteten und in Bezug auf die Turmachse radialen Flansch 18 auf, der besonders deutlich in Fig. 3 erkennbar ist. An der zum oberen Ende des Turms weisenden äußeren Stirnseite des radialen Flansches 18 ist der Außenring 19 eines in der Zeichnung nur schematisch dargestellten großen Wälzlagers 20 befestigt, dessen Innenring 21 mit einer Innenverzahnung versehen ist. Mit dieser Innenverzahnung kämmen Antriebsritzel 22 von insgesamt vier Stellmotoren 23, die im Inneren des Hohlkörpers 8 angeordnet und in zur Turmachse paralleler Ausrichtung ihrer das Antriebsritzel 22 antreibenden Antriebswelle an den radialen Flansch 18 angeflanscht sind. Die vier Stellmotoren 23 sind paarweise symmetrisch zu einer durch die Turmachse und die Rotorachse 3 gelegten gedachten Ebene auf dem radialen Flansch 18 angeordnet. Der Innenring 21 ist auf dem oberen Ende des Turms (nicht dargestellt) befestigt. Infolgedessen wird durch eine Betätigung der Stellmotore 23 der gesamte Grundrahmen in Bezug auf die Turmachse azimutal verstellt, wodurch die Rotorachse 3 gemäß der Windströmung ausgerichtet wird. Fig. 1 läßt erkennen, daß die Rotorachse 3 nicht genau senkrecht zur Turmachse verläuft, sondern zur Nabe 2 hin etwas ansteigt. Hierdurch wird ein Freiraum für eine winddruckbedingte Durchbiegung der Rotorblätter gegenüber dem Turm geschaffen.

In dem an das obere Ende des Turms angrenzenden unteren Endbereich 17 des unteren Teils 16 weist der in Bezug auf die Turmachse radiale Querschnitt des Hohlkörpers 8 eine zur Turmachse koaxiale kreisförmige Kontur auf. Für die axial darüberliegenden radialen Querschnitte des Hohlkörpers 8 geht die Kreisform fließend in zur Rotorachse 3 symmetrische und in deren Richtung langgestreckte Konturen über.

Fig. 4 zeigt die Kontur der Verbindungsstelle 15, die in einer Ebene liegt, welche sich parallel zur Rotorachse 3 sowie senkrecht zu einer durch die Rotorachse 3 und die Turmachse gelegten Ebene erstreckt. Der dem Rotor abgewandte Endbereich dieser Kontur weist einen leicht gewölbten ersten Abschnitt 24 auf, der sich quer zur Rotorachse 3 erstreckt und an seinen Enden 25 abgerundet etwa parallel zur Rotorachse 3 in Richtung auf den dem Rotor zugewandten Endbereich umgebogen ist. An die umgebogenen Enden 25 schließen sich in Richtung auf den dem Rotor zugewandten Endbereich nur geringfügig konvex gewölbte Seitenabschnitte 26 an, die an dem dem Rotor zugewandten Endbereich durch einen zum ersten Abschnitt 24 hin umgebogenen zweiten Abschnitt 27 miteinander verbunden sind.

Die Fig. 1 und 4 lassen weiter erkennen, daß der obere und der untere Teil 6, 16 an der Verbindungsstelle 15 je einen nach innen gerichteten Flansch 28 bzw. 28' aufweisen, deren einander zugewandte Stirnseiten aufeinanderliegen und die durch Schraubbolzen 29 zusammengespannt sind, welche in dichter Reihe längs der Flansche 28, 28' angeordnet sind. In dem dargestellten Ausführungsbeispiel ist der Flansch 28 des oberen Teils 6 mit durchgehenden Bohrungen 30 zum Durchtritt der Schraubbolzen 29 versehen, während der Flansch 28' des unteren Teils 16 dazu deckungsgleiche Gewindebohrungen aufweist, in welche die Schraubbolzen 29 eingedreht werden.

Die Konturen der zur Turmachse und zur Rotorachse 3 parallelen Längsschnitte des Hohlkörpers 8 verlaufen wie aus Fig. 1 ersichtlich ist, in ihren dem Rotor abgewandten Bereichen im wesentlichen parallel zur Turmachse. Ein solcher parallel verlaufender Konturabschnitt ist in Fig. 1 mit dem Bezugszeichen 31 bezeichnet. In ihrem dem Rotor zugewandten Bereich verlaufen diese Konturen unter einem von unten nach oben hin zunehmenden Abstand zur Turmachse. Der betreffende Konturabschnitt ist in Fig. 1 mit dem Bezugszeichen 32 bezeichnet.

Fig. 1 und 2 lassen besonders deutlich zwei langgestreckte Träger 33, 33' von I-förmigem Querschnitt erkennen, die an dem dem Rotor abgewandten Ende des oberen Teils 6 befestigt sind und sich in dem dargestellten Ausführungsbeispiel von dort aus etwa parallel zur Rotorachse 3 und längs einer in Bezug auf die Turmachse radialen Ebene erstrecken. Der Abstand zwischen den beiden Trägern 33, 33' entspricht etwa der Querabmessung des oberen Teils 6. Auf diesen Trägern 33, 33' ist über sich quer zu deren Längsrichtung erstreckende Querträger 34, 34' der Generator 13 abgestützt. Ferner können an den Trägern 33, 33' ggf. weitere, nicht dargestellte Komponenten der Windkraftanlage abgestützt sein.

Beim Bau einer neuen Windkraftanlage wird von der Struktur des Grundrahmens insbesondere in folgender Weise Gebrauch gemacht: Es werden sowohl der obere Teil 6 einschließlich der beiden Träger 33, 33' als auch der untere Teil 16 mit den daran anzuordnenden Komponenten, insbesondere der Welle 1, dem Getriebe 2, dem Generator 13 und dem Azimutalantrieb 20, 23 ganz oder teilweise im Herstellerwerk vormontiert. Die beiden vormontierten Einheiten werden zur Baustelle transportiert. Dort wird der untere Teil 16 auf den Turm gehoben und mit dessen oberem Ende verbunden. Dann wird der obere Teil 6 auf den unteren Teil 16 aufgesetzt und an der Verbindungsstelle 15 mit dem unteren Teil 16 verschraubt.

### Verzeichnis der Bezugszeichen

- 1: Welle
- 2: Nabe
- 3: Rotorachse
- 4: Aufnahmeöffnung
- 5: Hauptlager
- 6: oberer Teil
- 7: Aufnahme
- 8: Hohlkörper
- 9: freier Rand
- 10: Lagerbock
- 11: Aufnahme
- 12: Getriebe
- 13: Generator
- 14: Kupplung
- 15: Verbindungsstelle
- 16: unterer Teil
- 17: unterer Endbereich
- 18: radialer Flansch
- 19: Außenring
- 20: Wälzlager
- 21: Innenring
- 22: Antriebsritzel
- 23: Stellmotor
- 24: erster Abschnitt
- 25: Enden
- 26: Seitenabschnitte
- 27: zweiter Abschnitt
- 28, 28': Flansch
- 29: Schraubbolzen
- 30: Bohrungen
- 31: Konturabschnitt
- 32: Konturabschnitt
- 33, 33': Träger
- 34, 34': Querträger

## Patentansprüche

1. Grundrahmen zur Anordnung eines von einem windgetriebenen Rotor angetriebenen Triebstangs einer Windkraftanlage an deren Turm auf dem der Grundrahmen mit im wesentlichen horizontaler Ausrichtung der Rotorachse um die im wesentlichen vertikale Turmachse azimutal drehbar befestigt ist und aus einem den Triebstrang tragenden oberen Teil und einem damit an einer Verbindungsstelle zusammengesetzten, eine der azimutalen Drehung dienende Azimutalantriebseinrichtung aufweisenden unteren Teil aufgebaut ist, **dadurch gekennzeichnet, daß** sich die Verbindungsstelle (15) längs eines im wesentlichen horizontalen Querschnitts erstreckt, der in der Richtung der Rotorachse (3) eine größere Abmessung aufweist als in der dazu senkrechten Richtung.

2. Grundrahmen nach Anspruch 1, **dadurch gekennzeichnet, daß** der Grundrahmen einen durch eine im wesentlichen geschlossene Wandung in Bezug auf die Turmachse radial begrenzten Hohlkörper (8) aufweist, dessen Querschnitte in seinem an das obere Ende des Turmes angrenzenden unteren Endbereich (17) eine kreisförmige Kontur aufweisen, die für die axial darüber gelegenen Querschnitte in eine in Richtung der Rotorachse (3) langgestreckte Kontur übergeht, und die Verbindungsstelle (15) im Bereich seiner langgestreckten Konturen angeordnet ist.

3. Grundrahmen nach Anspruch 1 oder 2, **dadurch gekennzeichnet, daß** sich die Verbindungsstelle (15) der beiden Teile (6, 16) in einer sich parallel zur Rotorachse (3) und senkrecht zur Turmachse erstreckenden Ebene erstreckt.

4. Grundrahmen nach einem der Ansprüche 1 bis 3, **dadurch gekennzeichnet, daß** jeder der beiden Teile (6, 16) im Bereich der Verbindungsstelle (15) einen in Bezug auf die Turmachse im wesentlichen radialen Flansch (28, 28') aufweist, deren einander zugewandte Stirnflächen zusammenspannbar sind.

5. Grundrahmen nach Anspruch 4, **dadurch gekennzeichnet, daß** die beiden Teile (6, 16) durch die Flansche (28, 28') durchsetzende Schraubbolzen (29) verbindbar sind.

6. Grundrahmen nach einem der Ansprüche 2 bis 5, **dadurch gekennzeichnet, daß** die langgestreckten Konturen im Bereich der Verbindungsstelle (15) symmetrisch zur Rotorachse (3) ausgebildet sind und an ihrem dem Rotor abgewandten Endbereich einen sich quer zur Rotorachse (3) erstreckenden, an seinen Enden in Richtung auf den dem Rotor zugewandten Endbereich umgebogenen ersten Abschnitt (24), an ihrem dem Rotor zugewandten Endbereich einen zum abgewandten Endbereich hin gebogenen zweiten Abschnitt (27) und zwei den ersten mit dem zweiten Abschnitt verbindende Seitenabschnitte (26) aufweisen.

7. Grundrahmen nach einem der Ansprüche 2 bis 6, **dadurch gekennzeichnet, daß** die Konturen der zur Turmachse und zur Rotorachse (3) parallelen Längsschnitte des Hohlkörpers (8) in ihrem dem Rotor abgewandten Bereich im wesentlichen parallel zur Turmachse und in ihrem dem Rotor zugewandten Bereich unter einem von unten nach oben hin zunehmenden Abstand zur Turmachse verlaufen.

8. Grundrahmen nach einem der Ansprüche 1 bis 7, **dadurch gekennzeichnet, daß** in dem oberen Teil (6) in dessen dem Rotor zugewandten Bereich eine Aufnahme (7) für ein Rotorwellenlager (5) ausgebildet ist.

9. Grundrahmen nach einem der Ansprüche 1 bis 8, **dadurch gekennzeichnet, daß** in dem oberen Teil (6) in dessen dem Rotor abgewandten Bereich eine Aufnahme (11) zur Abstützung eines Getriebes (12) ausgebildet ist.

10. Grundrahmen nach einem der Ansprüche 1 bis 9, **dadurch gekennzeichnet, daß** der untere Teil (16) an seinem an das obere Ende des Turms angrenzenden unteren Endbereich einen radial nach innen gerichteten Flansch (18) aufweist, an dem mindestens ein Stellmotor (23) der Azimutalantriebseinrichtung mit zur Turmachse paralleler Antriebsachse und einem auf der Antriebsachse drehfest festgelegten Ritzel (22) zum kämmenden Eingriff in einen auf dem oberen Ende des Turms koaxial zur Turmachse befestigten Innenzahnkranz angeordnet ist.

11. Grundrahmen nach Anspruch 10, **dadurch gekennzeichnet, daß** der Innenzahnkranz am Innenring (21) eines Wälzlagers (20) ausgebildet ist, dessen Außenring (19) an dem unteren Teil (16) befestigt ist.

12. Grundrahmen nach einem der Ansprüche 1 bis 11, **dadurch gekennzeichnet, daß** an dem oberen Teil (6) zwei sich von dessen dem Rotor abgewandten Ende aus im wesentlichen in der Richtung der Rotorachse (3) erstreckende Träger (33, 33') angeordnet sind, auf denen mindestens ein Generator (13) der Windenergieanlage abstützbar ist.
